# EUROPÄISCHE PATENTSCHRIFT

(11) **EP 1 791 713 B1**
(45) Veröffentlichungstag und Bekanntmachung des Hinweises auf die Patenterteilung: **02.04.2008**
(21) Anmeldenummer: 05791298.2
(22) Anmeldetag: 21.09.2005
(51) Int. Cl.: B60K 11/04, F01P 3/18, B60H 1/32

(54) **WÄRMETAUSCHERANORDNUNG FÜR DEN FRONTBEREICH EINES KRAFTFAHRZEUGS**
HEAT EXCHANGER ASSEMBLY FOR THE FRONT SECTION OF A MOTOR VEHICLE
DISPOSITIF D'ECHANGE THERMIQUE DESTINE A LA PARTIE FRONTALE D'UN VEHICULE AUTOMOBILE

(30) Priorität: 22.09.2004 DE 102004047583
(43) Veröffentlichungstag der Anmeldung: 06.06.2007
(73) Patentinhaber: Behr GmbH & Co. KG, 70469 Stuttgart (DE); HBPO GmbH, 59552 Lippstadt (DE); Behr India Ltd., Khed, Pune 410 501 (IN)
(72) Erfinder: PALANDE, Pradeep, 70329 Stuttgart (DE); PILLAS, Thomas, 70825 Münchingen (DE); SEEGER, Andreas, 71155 Altdorf (DE); BAUER, Vitalij, 59597 Erwitte-Völlingen (DE); RAULF, Robert, 59555 Lippstadt (DE); ZHAO,Gaoming, 59557 Lippstadt (DE); KUMAR, Ravi, Thakur Village, Kandivili (East), Mumbai (IN)
(74) Vertreter: Patentanwälte Hosenthien-Held und Dr. Held
(86) Internationale Anmeldenummer: PCT/EP2005/010183
(87) Internationale Veröffentlichungsnummer: WO 2006/032471

(56) Entgegenhaltungen:
- EP-A- 0 417 500
- EP-A- 1 067 005
- DE-A1- 10 008 638
- DE-A1- 10 136 898
- DE-A1- 19 944 437

## Beschreibung

Die Erfindung betrifft eine Wärmetauscheranordnung für den Frontbereich eines Kraftfahrzeugs gemäß dem Oberbegriff des Anspruchs 1.

Zum Schutz von Fußgängern ist vorgeschrieben, dass im Crashfall mit einem Fußgänger eine gewisse Kraft nicht überschritten werden darf. Hierfür sind Crash-aktive Systeme, wie Airbags, und passive Systeme bekannt.

Ein derartiges passives System ist aus der DE 199 11 832 A1 bekannt. Hierin ist eine Tragestruktur für einen Endbereich eines Kraftfahrzeugs beschrieben, welche dem Fußgängerschutz dient, wobei ein unter einem Außenhautelement verborgener Querträger vorgesehen ist, der jeweils in den Seitenbereichen mit den zum Fahrzeugäußeren hin gerichteten Enden von Längsträgern verbunden ist. Zur Bereitstellung eines Fußgängerschutzes ist zum einen der Querträger in Mehrbalkenanordnung ausgeführt und zum anderen zwischen dem Außenhautelement und der Mehrbalkenanordnung zumindest ein Deformationselement angeordnet.

Hierbei ist als Mehrbalkenanordnung ein dreigliedriger Schildrahmen vorgesehen, der aus einem eine Bodenschürze abstützenden Unterbalken, einem vor einem Kühleraggregat verlaufenden Mittelbalken und einem am oberen Rand des Kühleraggregats verlaufenden Oberbalken zusammengesetzt ist. Der Schildrahmen umfasst zudem eine nach Art eines Schlussträgers ausgebildete Querplatte, auf der eine Verriegelungseinheit für einen der Fronthaube zugeordneten Schlosshaken befestigt ist. Dieser Schlosshaken ist als Bestandteil einer Deformationskonsole ausgeführt, die nach Art eines Sollverformungskörpers auf der Unterseite der Fronthaube befestigt ist und zusammen mit einem unterhalb des Stoßfängerüberzugs angeordneten ersten Stoßabsorptionselement eine anprallweiche Vorderwagenoberkante bildet. Das Kühleraggregat ist über Halteschwerter an den Schildrahmen angebunden. Hiermit ist eine Absenkung des Kühleraggregats möglich und eine Rückverlagerung der Verriegelungseinheit in das Fahrzeuginnere hinein kann vorgenommen werden. Für die unteren Beinbereich des Fußgängers sind ein zweites Stoßabsorptionselement und ein drittes Stoßabsorptionselement vorgesehen, das gleichzeitig auch die Bodenschürze in sich stabilisiert und für den Kühler ein Anfahrschutz bildet.

Aus der EP 0 417 500 A2 ist eine Kühleranordnung gemäss dem Oberbegriff des Anspruchs 1 für den Frontbereich eines Kraftfahrzeugs bekannt, wobei der Kühler mehrteilig ausgebildet ist, um eine ausreichende Kühlerfläche bei geringer Bauhöhe unter Weiterverwendung des brennkraftmaschinengetriebenen Kühlluftgebläses zu erreichen. Hierbei ist der Kühler in einzelne Bauteile aufgeteilt, die derart zueinander gestaffelt angeordnet sind, dass sie sich mit Abstand zueinander in Fahrtrichtung des Kraftfahrzeugs überdecken, und dass sie gemeinsam von dem Kühlluftgebläse beaufschlagt werden.

Eine derartigere Wärmetauscheranordnung lässt jedoch noch Wünsche offen.

Es ist Aufgabe der Erfindung, eine verbesserte Wärmetauscheranordnung zur Verfügung zu stellen, welche insbesondere die Fußgänger-Crashsicherheit und eine ausreichende Kühlleistung zu gewährleisten.

Diese Aufgabe wird gelöst durch eine Wärmetauscheranordnung mit den Merkmalen des Anspruchs 1. Vorteilhafte Ausgestaltungen sind Gegenstand der Unteransprüche.

Erfindungsgemäß ist eine Wärmetauscheranordnung, insbesondere Kühleranordnung für den Frontbereich eines Kraftfahrzeugs, vorgesehen, bei welcher der Wärmetauscher mehrteilig in Form von Wärmetauscher-Elementen, nämlich mindestens einem Haupt-Wärmetauscher und mindestens einem Neben-Wärmetauscher, ausgebildet ist, und mindestens zwei der Wärmetauscher-Elemente im Crashfall relativ zueinander verschiebbar angeordnet sind.

Hierbei weist das Lüfterrad des Gebläses Sollbruch- oder -verformungsstellen auf, insbesondere am Außen-, Innenring und/oder an den Übergängen von Außen- und/oder Innenring zu den Lüfterradschaufeln. Ein derart ausgelegtes Gebläse stellt zusätzlich eine ausreichende Verformung sicher, insbesondere auch im tieferliegenden Bereich.

Bevorzugt ist ein Wärmetauscher-Element, insbesondere der Neben-Wärmetauscher, im vorgesehenen Verformungsbereich, insbesondere für den Fall eines Fußgänger-Crashs, angeordnet und entgegen der normalen Fahrtrichtung des Kraftfahrzeugs im Crashfall insbesondere nach hinten verschiebbar. Durch die relative Verschiebbarkeit im Crashfall zueinander ergibt sich die Möglichkeit, ein passives Sicherheitssystem für den Fall eines Fußgänger-Crashs optimal auszulegen, ohne die Leistungsfähigkeit des Wärmetauschers zu beeinträchtigen. Vorzugsweise ist der Wärmetauscher hierbei zweiteilig ausgebildet, wobei insbesondere der Haupt-Wärmetauscher niedriger baut als herkömmliche Wärmetauscher, so dass er nicht in den für einen Crash mit einem Fußgänger relevanten Bereich ragt, und ein zweiter Neben-Wärmetauscher, der im für einen Crash mit einem Fußgänger relevanten Bereich angeordnet ist oder zumindest in diesen ragt, wobei dieser derart verschiebbar angeordnet ist, dass er im Crashfall unter Einhaltung der vorgegebenen maximalen Verformungs- bzw. Verschiebungskräfte aus der Gefahrenzone bewegt wird. In Folge der mehrteiligen Ausgestaltung kann die Gesamt-Wärmetauscherleistung aufrechterhalten werden.

Vorzugsweise ist der Neben-Wärmetauscher in einem Winkel ungleich 180°, vorzugsweise einem Winkel von 25° +/- 20°, bezüglich eines Haupt-Wärmetauschers angeordnet. So kann der im Verformungsbereich angeordnete Wärmetauscher für den Crashfall optimiert ausgerichtet sein, so dass Verletzungen möglichst gering gehalten werden können.

Die Anbringung des im Verformungsbereich angeordneten Neben-Wärmetauschers erfolgt bevorzugt mittels Verbindungselementen an einem Träger. Hierbei werden die Verbindungselemente entgegen der normalen Fahrtrichtung des Kraftfahrzeugs bei Überschreiten einer Grenzkraft aus ihren Lagern bewegt, so dass sich der Neben-Wärmetauscher bei Bedarf entgegen der normalen Fahrtrichtung des Kraftfahrzeugs verschieben lässt. Die Verbindungselemente werden vorzugsweise durch Stifte gebildet, die insbesondere in Lagern mit Schlitzen angeordnet sind, wobei die Schlitze in Verschiebungsrichtung angeordnet sind.

Alternativ können die Verbindungselemente, insbesondere Stifte oder Bolzen, auch Sollbruch- oder -verformungsstellen aufweisen, wodurch eine entsprechende Verschiebbarkeit des Neben-Wärmetauschers gewährleistet wird.

Der insbesondere durch einen Lüfterzargen gebildete Träger weist zumindest in einem Bereich, in den der Neben-Wärmetauscher im Crashfall verschoben werden kann, Sollbruch- oder -verformungsstellen auf, so dass im Verformungsbereich ein Träger angeordnet sein kann, dieser aber keine relevante Behinderung einer Verschiebung des Neben-Wärmetauschers im Crashfall verursacht. Vorzugsweise ist der Träger lamellenartig ausgebildet, wobei die Lamellen über die Sollbruch- oder -verformungsstellen miteinander verbunden sind.

Im Folgenden wird die Erfindung anhand eines Ausführungsbeispiels unter Bezugnahme auf die Zeichnung im Einzelnen erläutert. In der Zeichnung zeigen:

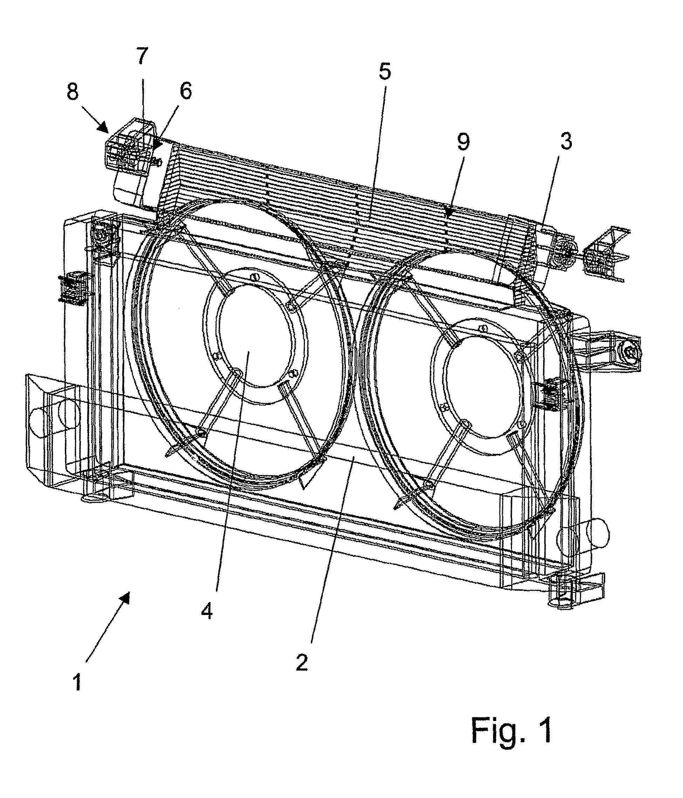

- Fig. 1: eine perspektivische Darstellung eines Kraftfahrzeug-Frontbereichs von schräg vom mit einer erfindungsgemäßen Wärmetauscheranordnung mit einem Haupt- und Neben-Wärmetauscher,

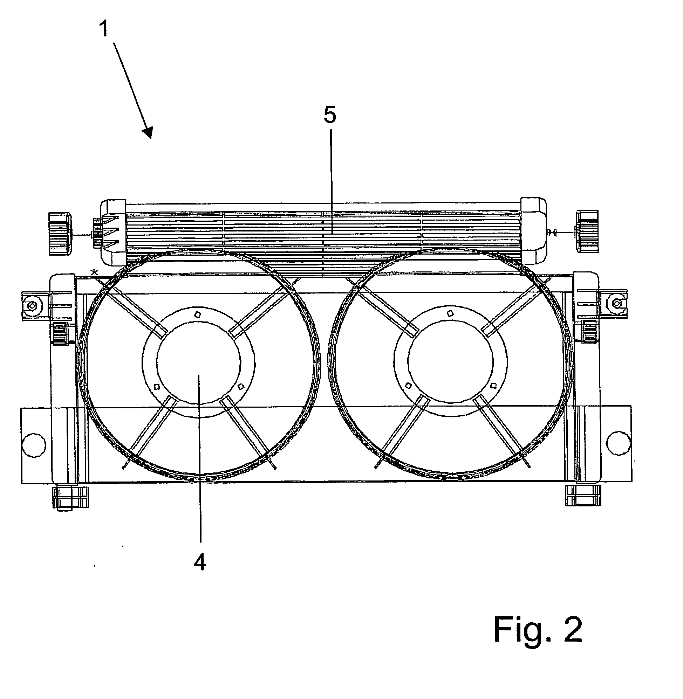

- Fig. 2: eine Frontansicht der Wärmetauscheranordnung von Fig. 1,
- Fig. 3: eine Seitenansicht der Wärmetauscheranordnung von Fig. 1,

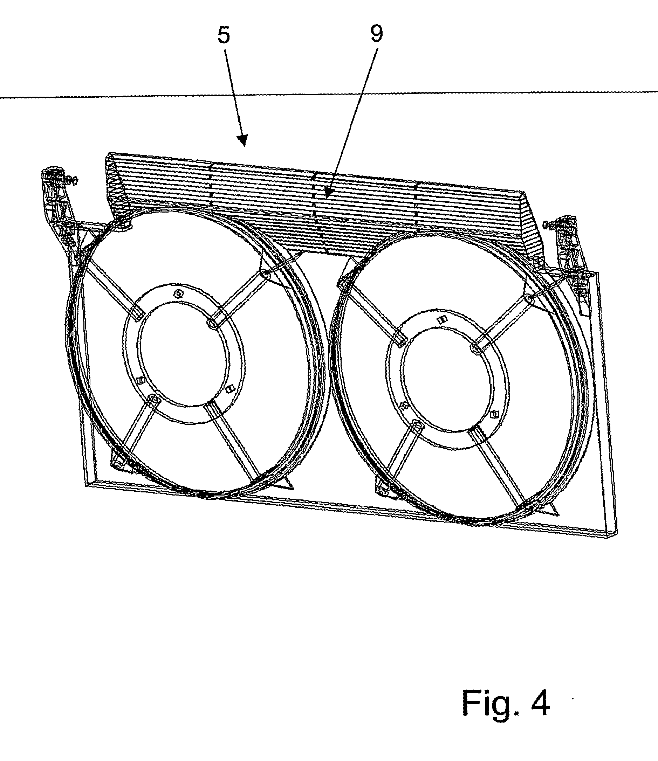

- Fig. 4: eine Fig. 1 entsprechende Ansicht ohne Darstellung des Haupt- und Neben-Wärmetauschers,

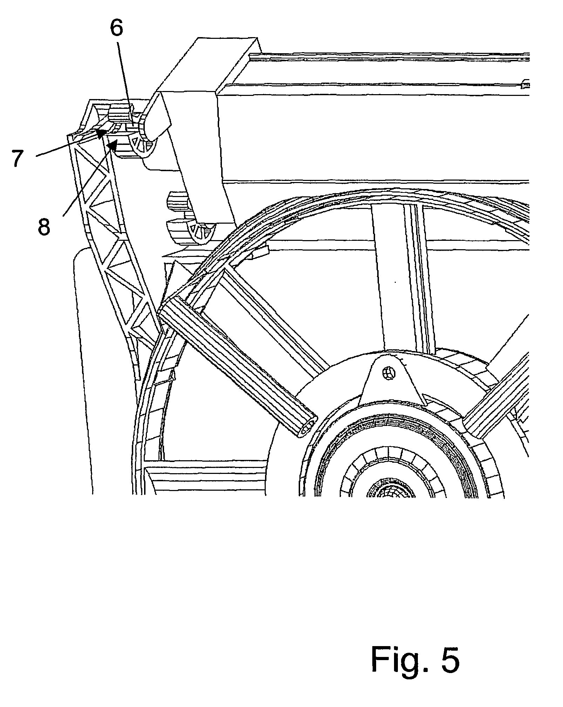

- Fig. 5: eine Detailansicht der Anbringung des Neben-Wärmetauschers,

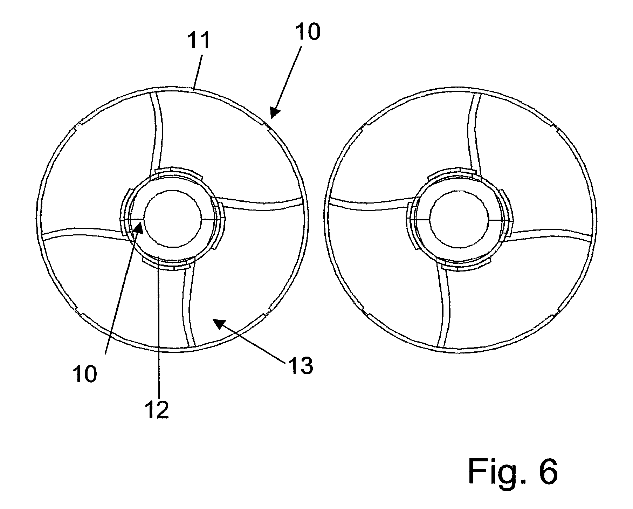

- Fig. 6: eine Detailansicht der Lüfterräder mit Sollbruchstellen, und

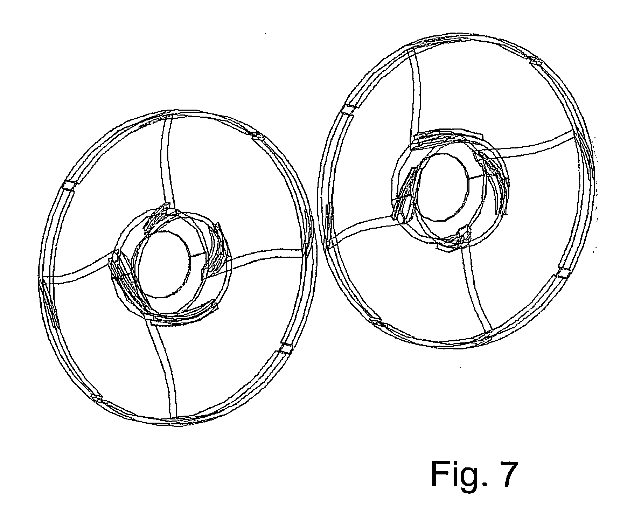

- Fig. 7: eine perspektivische Ansicht der Lüfterräder von Fig. 6.

Eine Wärmetauscheranordnung 1 des Frontbereichs eines Kraftfahrzeugs weist einen Haupt-Wärmetauscher 2, einen Neben-Wärmetauscher 3, ein Gebläse 4 mit zwei nebeneinander angeordneten Lüfterrädern und Lüfterzargen 5 als Träger auf. Der Haupt- und Neben-Wärmetauscher 2 bzw. 3 bilden zusammen das Kühleraggregat, d.h. den Kühler, zur Kühlung des Kühlmittels.

Zum Schutz von Fußgängern im Falle eines Crashs ist der Haupt-Wärmetauscher 2 mit seiner oberen Kante entsprechend tief angeordnet und daher auch etwas niedriger als herkömmliche Kühleraggregate ausgebildet. Durch die entsprechende Ausgestaltung des Haupt-Wärmetauschers 2 ist im oberen Bereich, insbesondere den oberen 120 mm, eine Sicherheitszone ausgebildet, die im Crashfall, insbesondere im Falle eines Fußgänger-Crashs, eine Verschiebbarkeit entgegen der normalen Fahrtrichtung des Kraftfahrzeugs (normale Fahrtrichtung = X-Richtung) gewährleistet, so dass in Folge der sich hieraus ergebenden Puffer- oder Sicherheitszone im Crashfall bei einem Fußgänger auftretende Verletzungen möglichst gering gehalten werden können.

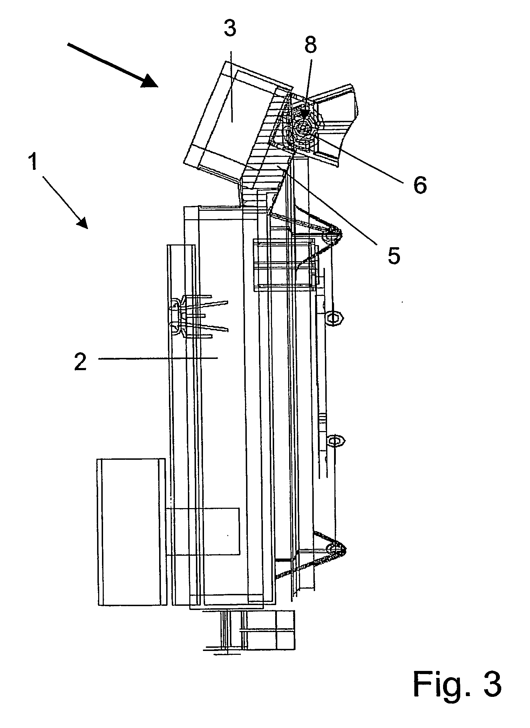

In dieser Sicherheitszone ist, leicht mit seinem oberen Bereich entgegen der Fahrtrichtung nach hinten geneigt, vorliegend um ca. 25°, der Neben-Wärmetauscher 3 angeordnet. Hierbei ist der Neben-Wärmetauscher 3 lösbar mittels Stiften 6 am Lüfterzargen 5 fixiert. Die Stifte 6 sind in seitlich mit Schlitzen 7 versehenen Lagern 8 aufgenommen, so dass die Stifte 6 bei Überschreiten einer Grenzkraft durch eine entgegen der X-Richtung wirkenden Kraft (oder eine Kraft mit einer entsprechenden X-Komponente) aus den Lagern 8 gelangen und der Neben-Wärmetauscher 3 entgegen der normalen Fahrtrichtung verschoben wird. Die geneigte Anordnung verringert zusätzlich die Gefahr schwerer Verletzungen in einem Fußgänger-Crashfall in Folge von Kanten. Hierbei ist die Aufprallrichtung in Fig. 3 durch einen Pfeil angedeutet.

Um die Verschiebbarkeit des Neben-Wärmetauschers 3 entgegen der normalen Fahrtrichtung zu gewährleisten, ist der Lüfterzargen 5, an dem der Neben-Wärmetauscher 3 und das Gebläse 4 angebracht sind, mit in der Sicherheitszone mit Sollbruch- und/oder -verformungsstellen 9 versehen. Hierfür weist der quer zur normalen Fahrtrichtung horizontal verlaufende Lüfterzargen 5 eine in Längsrichtung des Lüfterzargen 5 verlaufende lamellenartige Struktur auf, wobei dicke, tragende Bereiche über dünne, als Sollbruch- und/oder -verformungsstellen 9 dienende Bereiche verbunden sind. Neben den in Längsrichtung verlaufenden Sollbruch- und/oder -verformungsstellen 9 gibt es auch quer hierzu verlaufende Sollbruch- und/oder -verformungsstellen 9.

Um die Verformbarkeit des Frontbereichs des Kraftfahrzeugs weiter zu verbessern, sind die beiden Lüfterräder des Gebläses 4 ebenfalls mit Sollbruchstellen 10 versehen, wobei diese die Betriebssicherheit nicht beeinträchtigen dürfen. Diese Sollbruchstellen 10 sind insbesondere am Außenring 11, am Innenring 12 und/oder an den Übergängen von Innen- und/oder Außenring zu den Lüfterradschaufeln 13 vorgesehen, so dass die Strömungseigenschaften des Gebläses 4 nicht beeinträchtigt werden.

Im Falle eines Fußgänger-Crashs erfolgt eine Verformung des Frontbereichs des Kraftfahrzeugs, wobei bei Überschreiten einer Grenzkraft neben einer gewissen Verformung der Stoßstange auch eine wesentliche Verformung der Motorhaube unter Längs-Verschiebung des im oberen Bereich angeordneten Neben-Wärmetauschers 3 erfolgt. Hierbei gelangen die Stifte 6, mittels derer der Neben-Wärmetauscher 3 am Lüfterzargen 5 angebracht ist, durch die Schlitze 7 aus den Lagern 8. Der Haupt-Wärmetauscher 2 ist auf Grund seiner Dimensionierung nicht im kritischen Bereich angeordnet.

### Bezugszeichenliste

1 Wärmetauscheranordnung
2 Haupt-Wärmetauscher
3 Neben-Wärmetauscher
4 Gebläse
5 Lüfterzargen
6 Stift
7 Schlitz
8 Lager
9 Sollbruchstelle
10 Sollbruchstelle
11 Außenring
12 Innenring
13 Lüfterradschaufel

## Patentansprüche

1. Wärmetauscheranordnung, insbesondere Kühleranordnung für den Frontbereich eines Kraftfahrzeugs, mit einem Wärmetauscher (2, 3), der mehrteilig in Form von Wärmetauscher-Elementen, nämlich mindestens einem Haupt-Wärmetauscher (2) und mindestens einem Neben-Wärmetauscher (3), ausgebildet ist, **dadurch gekennzeichnet, dass** mindestens zwei der Wärmetauscher-Elemente im Crashfall relativ zueinander verschiebbar angeordnet sind, und dass das Lüfterrad des Gebläses (4) Sollbruch- oder -verformungsstellen (10) aufweist.

2. Wärmetauscheranordnung nach Anspruch 1, **dadurch gekennzeichnet, dass** ein Wärmetauscher-Element zumindest teilweise oberhalb des oder der anderen Wärmetauscher-Elemente angeordnet ist.

3. Wärmetauscheranordnung nach Anspruch 1 oder 2, **dadurch gekennzeichnet, dass** der Wärmetauscher zweiteilig als Haupt-Wärmetauscher (2) und Neben-Wärmetauscher (3) ausgebildet ist.

4. Wärmetauscheranordnung nach einem der vorhergehenden Ansprüche, **dadurch gekennzeichnet, dass** der Neben-Wärmetauscher (3) zumindest teilweise oberhalb des Haupt-Wärmetauschers (2) angeordnet ist.

5. Wärmetauscheranordnung nach einem der vorhergehenden Ansprüche, **dadurch gekennzeichnet, dass** ein Wärmetauscher-Element im Verformungsbereich angeordnet und zumindest bereichsweise entgegen der normalen Fahrtrichtung des Kraftfahrzeugs im Crashfall, insbesondere nach hinten, verschiebbar ist.

6. Wärmetauscheranordnung nach Anspruch 5, **dadurch gekennzeichnet, dass** das im Verformungsbereich angeordnete Wärmetauscher-Element ein Neben-Wärmetauscher (3) ist.

7. Wärmetauscheranordnung nach einem der vorhergehenden Ansprüche, **dadurch gekennzeichnet, dass** ein Neben-Wärmetauscher (3) in einem Winkel ungleich 180° bezüglich eines Haupt-Wärmetauschers (2) angeordnet ist.

8. Wärmetauscheranordnung nach einem der vorhergehenden Ansprüche, **dadurch gekennzeichnet, dass** ein Neben-Wärmetauscher (3) bezüglich eines Haupt-Wärmetauschers (2) entgegen der normalen Fahrtrichtung des Kraftfahrzeugs in einem Winkel von 25° +/- 20° oben nach hinten geneigt angeordnet ist.

9. Wärmetauscheranordnung nach einem der vorhergehenden Ansprüche, **dadurch gekennzeichnet, dass** ein Neben-Wärmetauscher (3) mittels Verbindungselementen an einem Träger fixiert ist, wobei die Verbindungselemente entgegen der normalen Fahrtrichtung des Kraftfahrzeugs bei Überschreiten einer Grenzkraft aus ihren Lagern (8) bewegt werden.

10. Wärmetauscheranordnung nach Anspruch 9, **dadurch gekennzeichnet, dass** die Verbindungselemente durch Stifte (6) gebildet sind.

11. Wärmetauscheranordnung nach Anspruch 9 oder 10, **dadurch gekennzeichnet, dass** Lager (8) Schlitze (7) aufweisen.

12. Wärmetauscheranordnung nach Anspruch 9 oder 10, **dadurch gekennzeichnet, dass** die Verbindungselemente Sollbruch- oder -verformungsstellen aufweisen.

13. Wärmetauscheranordnung nach einem der vorhergehenden Ansprüche, **dadurch gekennzeichnet, dass** der Träger zumindest in einem Bereich, in den der Neben-Wärmetauscher (3) im Crashfall verschoben werden kann, Sollbruch- oder -verformungsstellen (9) aufweist.

14. Wärmetauscheranordnung nach einem der vorhergehenden Ansprüche, **dadurch gekennzeichnet, dass** der Träger lamellenartig ausgebildet ist, wobei die Lamellen über die Sollbruch- oder -verformungsstellen (9) miteinander verbunden sind.

15. Wärmetauscheranordnung nach einem der vorhergehenden Ansprüche, **dadurch gekennzeichnet, dass** der Träger durch einen Lüfterzargen (5) gebildet ist.

16. Wärmetauscheranordnung nach einem der vorhergehenden Ansprüche, **dadurch gekennzeichnet, dass** das Lüfterrad im Bereich des Außenrings (11), des Innenrings (12) und/oder den Übergängen zwischen dein Außenring (11) bzw. dem Innenring (12) und den Lüfterradschaufeln (13) Sollbruch- oder -verformungsstellen (10) aufweist.

17. Kraftfahrzeug **gekennzeichnet durch** eine Wärmetauscheranordnung (1) nach einem der Ansprüche 1 bis 16.

## Claims

1. A heat exchanger assembly, in particular radiator assembly for the front section of a motor vehicle, with a heat exchanger (2, 3), **characterized in that** the heat exchanger (2, 3) is of multi-part design in the form of heat exchanger elements, namely at least one main heat exchanger (2) and at least one secondary heat exchanger (3), **characterized in that** at least two of the heat exchanger elements are arranged such that they can be displaced relative to each other in the event of a crash and that the wheel of the fan (4) has predetermined breaking or deformation points (10).

2. The heat exchanger assembly according to Claim 1, **characterized in that** one heat exchanger element is at least partially arranged above the other heat exchanger element or elements.

3. The heat exchanger assembly according to Claim 1 or 2, **characterized in that** the heat exchanger is of two-part design in the form of a main heat exchanger (2) and a secondary heat exchanger (3).

4. The heat exchanger assembly according to any of the preceding claims, **characterized in that** the secondary heat exchanger (3) is at least partially arranged above the main heat exchanger (2).

5. The heat exchanger assembly according to any of the preceding claims, **characterized in that** one heat exchanger element is arranged in the deformation region and, in the event of a crash, can be displaced, in particular rearward, at least in some sections, counter to the normal direction of travel of the motor vehicle.

6. The heat exchanger assembly according to Claim 5, **characterized in that** the heat exchanger element arranged in the deformation region is a secondary heat exchanger (3).

7. The heat exchanger assembly according to any of the preceding claims, **characterized in that** a secondary heat exchanger (3) is arranged at an angle not equal to 180° with respect to a main heat exchanger (2).

8. The heat exchanger assembly according to any of the preceding claims, **characterized in that** a secondary heat exchanger (3) is arranged with respect to a main heat exchanger (2) in a manner such that it is inclined rearward at the top at an angle of 25° +/- 20° counter to the normal direction of travel of the motor vehicle.

9. The heat exchanger assembly according to any of the preceding claims, **characterized in that** a secondary heat exchanger (3) is fixed to a support by means of connecting elements, the connecting elements being moved out of their bearings (8) counter to the normal direction of travel of the motor vehicle when a limit force is exceeded.

10. The heat exchanger assembly according to Claim 9, **characterized in that** the connecting elements are formed by pins (6).

11. The heat exchanger assembly according to Claim 9 or 10, **characterized in that** bearings (8) have slots (7).

12. The heat exchanger assembly according to Claim 9 or 10, **characterized in that** the connecting elements have predetermined breaking or deformation points.

13. The heat exchanger assembly according to any of the preceding claims, **characterized in that** the support has predetermined breaking or deformation points (9) at least in a region into which the secondary heat exchanger (3) can be displaced in the event of a crash.

14. The heat exchanger assembly according to any of the preceding claims, **characterized in that** the support is of lamellar design, with the lamellae being connected to one another via the predetermined breaking or deformation points (9).

15. The heat exchanger assembly according to any of the preceding claims, **characterized in that** the support is formed by a fan frame (5).

16. The heat exchanger assembly according to any of the preceding claims, **characterized in that** the fan wheel has predetermined breaking or deformation points (10) in the region of the outer ring (11), the inner ring (12) and/or the transitions between the outer ring (11) or the inner ring (12) and the fan wheel blades (13).

17. A motor vehicle **characterized by** a heat exchanger assembly (1) according to any of Claims 1 to 16.

## Revendications

1. Dispositif d'échange thermique, notamment un ensemble de radiateur destiné à la partie frontale d'un véhicule automobile, avec un échangeur de chaleur (2, 3) qui est réalisé en plusieurs parties sous la forme d'éléments échangeurs de chaleur, à savoir au moins un échangeur de chaleur principal (2) et au moins un échangeur de chaleur secondaire (3), **caractérisé en ce qu'**au moins deux des éléments échangeurs de chaleur sont disposés à translation l'un par rapport à l'autre en cas de collision, et **en ce que** la roue de ventilateur de la soufflante (4) présente des points (10) de rupture ou de déformation privilégiée.

2. Dispositif d'échange thermique selon la revendication 1, **caractérisé en ce qu'**un élément échangeur de chaleur est disposé au moins partiellement au-dessus du ou des autres éléments échangeurs de chaleur.

3. Dispositif d'échange thermique selon la revendication 1 ou 2, **caractérisé en ce que** l'échangeur de chaleur est réalisé en deux parties, à savoir un échangeur de chaleur principal (2) et un échangeur de chaleur secondaire (3).

4. Dispositif d'échange thermique selon l'une des revendications précédentes, **caractérisé en ce que** l'échangeur de chaleur secondaire (3) est disposé au partiellement au-dessus de l'échangeur de chaleur principal (2).

5. Dispositif d'échange thermique selon l'une des revendications précédentes, **caractérisé en ce qu'**un élément échangeur de chaleur est disposé dans la région de déformation et peut être déplacé en cas de collision au moins pour région à l'encontre de la direction normale de marche du véhicule automobile, notamment vers l'arrière.

6. Dispositif d'échange thermique selon la revendication 5, **caractérisé en ce que** l'élément échangeur de chaleur disposé dans la région de déformation est un échangeur de chaleur secondaire (3).

7. Dispositif d'échange thermique selon l'une des revendications précédentes, **caractérisé en ce qu'**un échangeur de chaleur secondaire (3) est disposé sous un angle différent de 180° par rapport à un échangeur de chaleur principal (2).

8. Dispositif d'échange thermique selon l'une des revendications précédentes, **caractérisé en ce qu'**un échangeur de chaleur secondaire (3) est disposé en étant incliné par sa région supérieure, par rapport à un échangeur de chaleur principal (2), sous un angle de 25° ± 20° vers l'arrière, à l'encontre de la direction normale de marche du véhicule automobile.

9. Dispositif d'échange thermique selon l'une des revendications précédentes, **caractérisé en ce qu'**un échangeur de chaleur secondaire (3) est fixé au moyen d'éléments de liaison sur un élément porteur, sachant que les éléments de liaison sont déplacés hors de leurs paliers à l'encontre de la direction normale de marche du véhicule automobile en cas de dépassement d'une force limite.

10. Dispositif d'échange thermique selon la revendication 9, **caractérisé en ce que** les éléments de liaison sont formés par des broches (6).

11. Dispositif d'échange thermique selon la revendication 9 ou 10, **caractérisé en ce que** des paliers (8) présentent des fentes (7).

12. Dispositif d'échange thermique selon la revendication 9 ou 10, **caractérisé en ce que** les éléments de liaison présentent des points de rupture ou de déformation privilégiée.

13. Dispositif d'échange thermique selon l'une des revendications précédentes, **caractérisé en ce que** l'élément porteur présente des points (9) de rupture ou de déformation privilégiée au moins dans une région dans laquelle l'échangeur de chaleur secondaire (3) peut être déplacé en cas de collision.

14. Dispositif d'échange thermique selon l'une des revendications précédentes, **caractérisé en ce que** l'élément porteur est réalisé du genre lamelles, les lamelles étant mutuellement reliées par l'intermédiaire des points (9) de rupture ou de déformation privilégiée.

15. Dispositif d'échange thermique selon l'une des revendications précédentes, **caractérisé en ce que** l'élément porteur est formé par un châssis de ventilateur (5).

16. Dispositif d'échange thermique selon l'une des revendications précédentes, **caractérisé en ce que** la roue de ventilateur présente des points (10) de rupture ou de déformation privilégiée dans la région de la bague extérieure (11), de la bague intérieure (12) et/ou des transitions entre respectivement la bague extérieure (11) ou la bague intérieure (12) et les pales (13) de roue de ventilateur.

17. Véhicule automobile, **caractérisé par** un dispositif d'échange thermique (1) selon l'une des revendications 1 à 16.
